Europäisches Patentamt

European Patent Office

Office européen des brevets

(11) Publication number: **0 161 201**
**A2**

# EUROPEAN PATENT APPLICATION

(21) Application number: 85630065.2

(22) Date of filing: 30.04.85

(51) Int. Cl.⁴: **B 60 C 21/08**

(30) Priority: 02.05.84 US 606093

(43) Date of publication of application:
13.11.85 Bulletin 85/46

(84) Designated Contracting States:
DE FR GB IT

(71) Applicant: THE GOODYEAR TIRE & RUBBER COMPANY
1144 East Market Street
Akron, Ohio 44316(US)

(72) Inventor: Cohn, Alan Edward
932A Snowfall Spur
Akron Ohio 44313(US)

(72) Inventor: Dobson, Robert Loren
397 Spring Grove Drive
Tallmadge Ohio 44278(US)

(74) Representative: Weyland, Joseph Jean Pierre
Goodyear International Tire Technical Center Patent
Department Avenue Gordon Smith
L-7750 Colmar-Berg(LU)

(54) Pneumatic tire having puncture sealing feature.

(57) Pneumatic tire having an adherent sealant composite on its inner surface comprised of an admixture of (A) partially pre-crosslinked butyl rubber, (B) polybutene, (C) thermoplastic copolymer tackifying resin and (D) mercaptosilane modified clay.

## PNEUMATIC TIRE HAVING PUNCTURE SEALING FEATURE

### Technical Field

This invention relates to a puncture sealing pneumatic tire. This invention particularly relates to a pneumatic tire of the tubeless type having a puncture sealant feature.

### Background Art

Modifications to pneumatic tires have historically been sought for retarding or preventing their deflation upon being punctured. Many methods, sealants and tire constructions have been suggested for such purpose. Fluid and semi-solid puncture sealant coatings which seal by flowing into the puncture hole have often been unsuccessful primarily because their flow characteristics have tended to cause the tire to become out of balance and also because many times the sealants have not been operable or effective over a wide temperature range extending from summer to winter conditions.

Thus, various tire sealant compositions have been observed to either (A) provide a sealing effect but flow excessively at elevated tire temperatures or (B) possess sufficient rigidity or resistance to flow at elevated temperatures but do not adequately seal at low temperatures.

Efforts to limit or inhibit excessive sealant flow by stiffening the composition have sometimes been undertaken by adding small quantities of crosslinkers to the sealant composition so that they only partially cure the sealant's rubber component. This has been observed to cause excessive variations from tire to tire primarily due to varying sealant cure temperature after application to the tire which affects the state of crosslinking and thus the degree of sealant stiffening. By using a pre-partially crosslinked rubber polymer, where the active cure of crosslink agents is pre-stabilized in the rubber before application to the tire, a more thermally stable stiffened sealant composition is provided.

It is an aspect of this invention to provide a puncture sealing pneumatic tire which has an ability to seal against puncturing objects.

## Disclosure and Practice of Invention

In accordance with this invention a pneumatic tire is provided which comprises a tire casing having a strip of sealant composite adhered to its inner surface comprised of an admixture of (A) one hundred parts by weight of a pre-partially crosslinked butyl rubber, said butyl rubber having been partially crosslinked prior to mixing with the remainder of any of the following ingredients (B), (C) and (D); (B) about 40 to about 200, preferably about 100 to about 150, parts by weight polybutene having a viscosity in the range of about 50 to about 5000, preferably about 100 to about 4400, centistokes at 99°C., (C) about 40 to about 120, preferably about 80 to about 100, parts by weight of at least one thermoplastic olefin/diolefin copolymer tackifying resin having a softening point in the range of about 10°C. to about 110°C., preferably about 90°C. to about 100°C. and, (D) about 50 to about 130, preferably about 90 to about 110, parts by weight mercaptosilane modified kaolin clay having pendant mercapto groups.

Through use of the pre-partially crosslinked butyl rubber, in combination with the polybutene, a relatively thermally stable sealant composition is obtained which has been observed to permit the use of a relatively large amount of tackifying resin which has been observed to enhance a sealing effect at relatively low temperatures while also enabling the use of the mercaptosilane modified clay.

Typically the clay has an average particle size in the range of about 100 to 500 U.S. standard sieve size.

The viscosity of the polybutenes can conveniently be determined by ASTM method D446 and the softening point of the copolymer tackifying resin can conveniently be determined by ASTM No. E28-58T.

In U.S. Patent 4,359,078, a sealant composite is provided as a mixture of (A) a partially crosslinked butyl rubber, (B) plasticizer for the rubber which can be a polyisobutylene, (C) a tackifying resin, preferably in an amount of 2 to 50 phr and (D) a particulate rubber reinforcement which can be a carbon black. It is understood that the purpose of the polyisobutylene component is to reduce the viscosity of the composite, however, it is also understood that it carries with it a penalty of reducing or diluting both the adhesive ability and thermal stability of the sealant composite.

In contradistinction, the sealant composition of this invention provides an important and innovative departure from such mixture, particularly by the combination of (A) replacing the polyisobutylene polymer with a polybutene, (B) utilization of a high level of the specified tackifying resin and (C) replacing the carbon black with the modified clay without additional coupling agent.

In further accordance with this invention, a puncture sealing pneumatic tire of the tubeless type is provided having two spaced, essentially inextensible beads, a crown portion generally having an outer tread, a pair of individual sidewalls extending radially from the axial outer edges of said crown portion to join the respective beads, a supporting or reinforcing structure for said crown portion and sidewalls, usually extending from bead to bead and often referred to as a carcass, and said sealant composite strip adhered to its inner surface. It is preferred that the sealant composite sheet or strip is positioned and adhered circumferentially around the inside of the tire on its inner surface in the area of its crown portion, therefore, opposite the tread, although it can, if desired, cover a major portion or entire inner surface of the tire by extending essentially from bead-to-bead.

The sealing composite strip can be applied as a unitary sheet form, as a multiple of individual strips or as a relatively narrow individual strip spirally adhered circumferentially around the inner surface of the crown portion of the tire.

It is to be appreciated that the sealant composite can be adhered as an extruded strip circumferentially and spirally around the inside of the tire on its inner surface in the area of its crown portion with sufficient revolutions to achieve a desired width of the composite.

The adherent, sealant composite on the inside surface of the tire has a thickness in the range of about 0.1 (0.25) to about 0.3 (0.76), preferably about 0.12 (0.3) to about 0.25 (0.6) inches (cm). Thus, a desirable thickness can be in the range of about 0.15 (0.4) to about 0.25 (0.6) inch (cm).

The sealant composite, adhered to the inside surface of the tire is particularly valuable for sealing against puncturing objects and for sealing holes left upon their removal, over a wide range of temperatures, such as from about -20°C. to about 100°C. The sealant is also particularly valuable because of its resistance to flow, or a relative resistance to change in its physical state after being applied to the inner surface of the tire. Thus, it exhibits an enhanced degree of dimensional stability.

Uniquely the sealant composite is preferably applied and adhered to the interior surface of a cured pneumatic rubber tire of the tubeless type by being extruded under conditions of heat and pressure to form a strip or sheet directly onto the tire surface which, upon release from shear force of extrusion, substantially immediately sets up to form the adherent sealant composition characterized by a having a high ability to adhere to metal puncturing objects while maintaining a dimensional stability and resistance to flow as opposed to a fluid being spray coated, brushed or poured onto the interior surface of the tire.

'The backbone of the sealant composite is the pre-partially crosslinked butyl rubber. It is important that the butyl rubber is partially pre-crosslinked prior to mixing with the other ingredients and prior to application to the inner tire surface. It is desired that little or essentially no curing or crosslinking of the butyl rubber be affected after application to the inside of the tire. One important reason is to provide better control over the degree of crosslinking (e.g. to prevent over crosslinking) of the butyl and, also to eliminate a secondary curing of the resultant cured tire/sealant assembly.

The butyl rubber is one of the type prepared by polymerizing a mixture of isobutlyene and a minor amount of isoprene. The mixture can also contain a crosslinking agent for pre-partially crosslinking the butyl rubber. The butyl or halobutyl is partially crosslinked to. an extent characterized by about 10 to about 90 percent, preferably about 20 to about 80 percent soluble in cyclohexane at about 80°C. This compares to about 2 percent soluble for a lesser crosslinked butyl and only about 98 weight percent soluble for a higher crosslinked butyl.

The butyl rubber typically has an average molecular weight in excess of 100,000, preferably in the range of 200,000 to 400,000 and even more preferably in the range of about 300,000 to about 400,000. As already pointed out, the butyl rubber is partially crosslinked. The partially crosslinking of the butyl rubber is intended to provide a composite which is not fully cured so that it is not fully resilient and has some capability of deforming under force or pressure, as opposed to the more resilient, rubbery matrix of a fully cured material. However, the partially cured composite is intended to be distinguished from one which has little or no cure at all so that it maintains the required degree of dimensional stability.

In these regards, the crosslinking of the butyl rubber can be accomplished by various means. Such methods include outright curing with a sulfur or quinoid system. Purely peroxide cure systems are generally not desired Alternately, cure-promoting agents can be included in the isobutylene-isoprene polymerization mixture which enhances a crosslinking of the butyl upon or after its recovery from the polymerization system. Generally, such crosslinking methods and techniques are known to those having skill in the art and it is considered that the technology need not be repeated here.

The tackifying resin is used in the practice of this invention to enhance the composite's stickiness and ability to seal around the puncturing object. Obviously, a primary purpose is to increase the inherent tack of the composite of this invention. Accordingly, it is intended that the resin be normally considered as a rubber tackifier and compatible or easily mixed with the polyisoprene rubbers. Representative of such resin is a thermoplastic polymeric resinous composition comprising about 40 to 80 weight percent units derived from piperylene and from about 60 to 20 weight percent units derived from 2-methyl-2 butene wherein the said resinous composition has a softening point from about 76°C to about 115°C, preferably about 90°C to about 100°C. The said polymeric resinous composition can be modified by having up to about 25 weight percent units derived from other unsaturated hydrocarbons containing 4 to 6 carbon atoms. The monomer mixture is polymerized in the presence of an anhydrous metal halide selected from aluminum chloride or stannic chloride, preferably aluminum chloride.

It is important to appreciate that such resins are usually used in an amount of about 3-10 phr in rubbers to provide tack so that they adhere during product manufacture. Rubber products requiring adhesion to other products conventionally contain 20-40 phr of the resin. Resin manufacturers often design their resins to be compatible with rubbers at least through this range. Uniquely, by partially pre-crosslinking the butyl rubber before compounding, it was that use of this resin at levels beyond expectation produced a sealant composite of exceptional performance.

The clay is required to be a mercaptosilane treated kaolin clay. Clays are typically defined as hydrated aluminum silicates understood to be of the generalized formula: $Al_2O_35:O_2 \cdot xH_2O$.

Indeed, an important feature of this invention is the inclusion of the mercaptosilane modified kaolin clay. A number of types of clays were evaluated by mixing them individually with the sealant compositions. The mercaptosilane modified kaolin clay-containing composition was observed to particularly enhance the sealant composition's ability to stick to, adhere and seal against the surface of a puncturing nail in a test sample of the composition. While it may be taught that a mercaptosilane modified kaolin clay can improve a sulfur vulcanized rubber's physical modulus (toughness) by covulcanizing the modified clay with rubber in the presence of sulfur, it is believed that this is the first utilization of such a clay to achieve the observed beneficial sealant enhancing results in a butyl rubber-containing composition without involving or utilizing a covulcanizing step. In other words, the benefit is obtained without a sulfur covulcanization of the mercaptosilane modified clay with the pre-partially crosslinked butyl rubber-containing sealant composition. This is an important feature of the invention and sealant composition discovery.

Although the method of preparation of such a modified clay is not fully understood it is understood that the modified clay may be prepared by attaching a hydrolyzed silanol group of a mercaptosilane to the surface of the particulate kaolin clay (hydrated aluminum silicate). Apparently the silane portion of the mercaptosilane has an affinity for the silica portion of the kaolin. It is further understood that the mercaptosilane might sometimes be termed a mercapto-organosilane or mercapto-organosiloxane, depending upon technical interpretation or appropriate definition of the silicone chemistry and chemical composition. The organic portion might be an aliphatic hydrocarbon radical, such as, for example, an aliphatic saturated hydrocarbon radical, positioned between the HS-group(s) and silane (siloxane) group and may contain from about 1 to about 6, such as about 1 to 4, carbon atoms.

It is to be understood that antioxidants, antiozonants and coloring pigments can be included in the sealant composite mixture.

The sealant composite can be conveniently extruded directly onto the inner surface of a cured rubber tire by preferably cleaning or preparing the inner surface of the tire. Such cleaning or preparation can be accomplished by (i) cleaning with an aqueous detergent solution or hydrocarbon solvent and allowing it to dry and/or (ii) buffing or abrading the surface to roughen it.

The methodology of cleaning or preparing the tire surface will largely depend upon the tire surface composition and cure and pre-cure history of the tire.

The method or operation of the sealing effect against a puncturing object or the sealing of the hole in the tire is by mechanical means of the sheet composite adhering to and sealing around the puncturing object or sealing the hole itself, relying on both the tack and plasticity of the composite to stick to the nail or puncturing object, and pulled into the hole as the nail or object is withdrawn through the sealant composite.

The tire of this invention can self-seal against various puncturing objects depending somewhat upon the tack, resiliency and thickness of the sealant composite as well as the size and shape of the puncturing object. Typically, the tire can self-seal punctures caused by nails and objects of various sizes. Representative of such nails are No. 4 to 8 penny size nails and although nails generally having a diameter up to about 0.15 inch (0.38 cm) are contemplated.

The vulcanized rubber tire itself can be of various cured or vulcanized rubbers such as natural rubber and synthetic rubber and their mixtures or blends. For example, it can be rubbery butadienestyrene copolymers, butadiene-acrylonitrile copolymers, cis-1,4-polyisoprene, polybutadiene, isoprene- butadiene copolymers, butyl rubber, halogenated butyl rubber, such as chloro or bromobutyl rubber, ethylene-propylene, copolymers, ethylene-propylene terpolymers (EPDM's), elastomeric copolyesters and polyurethane elastomers. Typically, the various polymers are cured or vulcanized by normal curing methods and recipes.

The sealant composition is formulated to contain certain specific constituents within narrow and defined composition ranges. The difficulty lies in providing a composition which has the ability to both heal cuts in the sealant caused by a puncture and to seal by sticking against a puncturing object or sealing a puncture hole when the puncturing object is withdrawn, pulling the sealant into the hole. Once the puncturing object is removed and the hole filled, the sealant has been observed to have sufficient strength and stability to maintain air under pressures, generally at least up to 24 and preferably up to 40 psig (pounds per square inch-gauge) while the tire is being run under test.

The practice of this invention is further illustrated by reference to the following examples which are intended to be representative rather than restrictive of the scope of the invention. Unless otherwise indicated, all parts and percentages are by weight.

## EXAMPLE I

Tubeless pneumatic tires were prepared, shaped and cured of the conventional passenger automobile type having a tread, spaced beads, sidewalls connecting said tread and beads and a fabric reinforced supporting carcass for the tread and sidewalls.

The inner surface of the carcass of the tires, particularly in the crown region opposite the tread was cleaned by washing with soap water and drying to expose a fresh, clean, cured rubber surface.

A strip of sticky sealant composite, about 2 inches (5 cm) and about 0.18 inch (0.46 cm) thick was circumferentially applied and adhered directly onto the inner, cleaned, surface of the tire in its crown region under extrusion conditions of heat and pressure to form an adherent sealant composite layer having a width of about 6 inches (15 cm).

The sealant composites, or compositions, for the tires were comprised of the recipes shown in the following Table 1 and identified as compositions (A) (containing carbon black and (B) (containing clay):

## Table 1

| Components | Composition | |
|---|---|---|
| | A | B |
| Partially crosslinked butyl rubber[1] | 100 | 100 |
| Polybutene[2] | 90 | 150 |
| Tackifying Resin[3] | 100 | 90 |
| Clay[4] | -- | 90 |
| Carbon Black, Reinforcing type | 90 | -- |
| Zinc Oxide | 5 | 5 |

[1]Partially pre-crosslinked, such as Polysar PBXL20, Polysar Ltd. and Bucar EX263, Cities Service, Inc., Columbian Division.

[2]A polybutene having a viscosity of about 4250 centistokes at 99°C. as Indopol H1900 from Amoco.

[3]Obtained as a thermoplastic diolefin/olefin copolymer of piperylene and 2-methyl-2-butene prepared by polymerization with aluminum chloride and having a softening point in the range of 95°C., to 100°C.

[4]Mercaptosilane treated hydrated aluminum silicate (kaolin clay), Nucap 100 from the J. M. Huber Corporation.

EXAMPLE II

Tubeless, pneumatic tires of P215/75R15 size were prepared with the adherent sealant composites in accordance with Example I (Compositions A and B).

The tires of Example I were tested in combination with and compared to a control P215/75R15 tire without a sealant composition applied to its inner surface.

For the test, the tires were mounted on a rim, inflated and allowed to rotate, under load, against a 67.5 inch (171 cm) diameter motor-driven dynamometer. The tires were tested according to procedure (AB-1101) at a speed of about 50 miles per hour (mph) (90 kph) under about a 1285 pound (583 kg) load with a hot inflation temperature of about 30 pounds per square inch (psi) (207 kpa). Under this test the tire were run for 100 miles (160 km) for conditioning purposes and then punctured with a 0.18 inch (0.46 cm) diameter (20 penny size) nail into and through a major tread groove. The tires were then allowed to run under the prescribed speed and load while their internal inflation pressure was periodically measured.

Surprisingly, it was observed that the sealant composition of this invention (tire according to Composition B, Example I) enabled the tire to travel substantially further with the nail in and travelled 3000 miles (5400 km) without failure when the nail was pulled out. The dynamometer test results are shown in the following table 2.

## Table 2

### Dynometer Test Results

| Tire | Nail In | Nail Out |
|---|---|---|
| Control (No Sealant) | 358 miles[1] (644 km) | 466 miles[1] (300 km) |
| (A) Sealant Containing Carbon Black | 6,408 miles[1] (11,530km) | 3,000 miles S/F[2] (5,400 km) |
| (B) Sealant Containing Clay | 8,000 miles[1] (12,880 km) | 3,000 miles S/F[2] (5,400 km) |

[1]Miles run until inflation pressure dropped to about 13 psi (90 kpa).

[2]S/F: Stop/Finish test stopped before inflation pressure dropped to about 13 psi (90 kpa) so that no failure is reported at 3000 miles.

While certain representative embodiments and details have been shown for the purpose of illustrating the invention, it will be apparent to those skilled in this art that various changes and modifications may be made therein without departing from the spirit or scope of the invention.

WHAT IS CLAIMED IS:

1. A pneumatic tire which comprises a tire casing having a strip of sealant composite adhered to its inner surface characterized in that said sealant composite is comprised of an admixture of (A) one hundred parts by weight of pre-partially crosslinked butyl rubber, said butyl rubber having been partially crosslinked prior to mixing with the remainder of any of the following ingredients (B), (C) and (D); (B) about 40 to about 200 parts by weight polybutene having a viscosity in the range of about 50 to about 5000 centistokes at 99°C., (C) about 40 to about 120 parts by weight of at least one thermoplastic olefin/diolefin copolymer tackifying resin having a softening point in the range of about 10°C., to about 110°C., and (D) about 50 to about 130 parts by weight mercaptosilane treated clay having pendant mercapto groups.

2. The pneumatic tire of Claim 1 characterized in that said butyl rubber is pre-crosslinked to an extend of being characterized by being about 20 to about 80 percent soluble in cyclohexane at about 80°C and having a molecular weight in the range of about 200,000 to about 400,000, and the tackifying resin is comprised of a piperylene/2-methyl-2-butene copolymer.

3. The pneumatic tire of Claim 1 characterized in that said tackifying resin has a softening point in the range of about 90°C., to about 100°C., and is comprised of about 40 to about 80 weight percent units derived from piperylene and from about 60 to about 20 weight percent units derived from 2-methyl-2 butene, optionally modified by having up to about 25 weight percent units derived from other unsaturated hydrocarbons containing 4 to 6 carbon atoms, and where the monomer mixture is polymerized in the presence of aluminum chloride.

4. The pneumatic tire of Claim 1 of the tubeless type composed of two spaced, essentially inextensible beads, a crown portion generally having an outer tread, a pair of individual sidewalls extending radially from the axial outer edges of said crown portion to join the respective beads, a supporting or reinforcing carcass structure for said crown portion and sidewalls, extending from bead to bead and said sealant composite adhered as a strip to its inner surface, in the area of its crown portion characterized in that said sealant composite is comprised of an admixture of (A) one hundred parts by weight of said pre-partially crosslinked rubber (B) about 100 to about 150 parts by weight polybutene having a viscosity, in the range of about 100 to about 4400 centistokes at 99°C., (C) about 80 to about 100 parts by weight of at least one thermoplastic olefin/ diolefin copolymer tackifying resin having a softening point in the range of about 90°C., to about 100°C., and (D) about 90 to about 110 parts by weight of said mercaptosilane modified clay.

5. The pneumatic tire of Claim 4 characterized in that said tackifying resin is comprised of about 40 to about 80 weight percent units derived from piperylene and from about 60 to about 20 weight percent units derived from 2-methyl-2 butene, optionally

0161201

modified by having up to about 25 weight percent units derived from other unsaturated hydrocarbons containing 4 to 6 carbon atoms, and where the monomer mixture is polymerized in the presence of aluminum chloride.

6. The pneumatic tire of Claim 4 characterized in that said butyl rubber is pre-crosslinked to an extent of being characterized by being about 20 to about 80 percent soluble in cyclohexane at about 80°C and having a molecular weight in the range of about 200,000 to about 400,000, and the tackifying resin is comprised of a piperylene/2-methyl-2-butene copolymer.